# EUROPÄISCHE PATENTSCHRIFT

(11) **EP 3 158 287 B1**
(45) Veröffentlichungstag und Bekanntmachung des Hinweises auf die Patenterteilung: **04.03.2020**
(21) Anmeldenummer: 16736780.4
(22) Anmeldetag: 12.05.2016
(51) Int. Cl.: G01B 11/25

(54) **VERFAHREN ZUR BILDERFASSUNG EINER VORZUGSWEISE STRUKTURIERTEN OBERFLÄCHE EINES OBJEKTS**
METHOD FOR DETECTING AN IMAGE OF A PREFERABLY STRUCTURED SURFACE OF AN OBJECT
PROCÉDÉ DE DÉTECTION D'IMAGES D'UNE SURFACE DE PRÉFÉRENCE STRUCTURÉE D'UN OBJET

(30) Priorität: 09.07.2015 DE 102015212843; 10.05.2016 DE 102016208049
(43) Veröffentlichungstag der Anmeldung: 26.04.2017
(73) Patentinhaber: INB Vision AG, 39118 Magdeburg (DE)
(72) Erfinder: WIEST, Hagen, 39112 Magdeburg (DE); SCHMIDT, Wolfram, 06463 Stadt Falkenstein (DE); WAGNER, Robert, 94127 Neuburg am Inn (DE)
(74) Vertreter: Patent- und Rechtsanwälte Ullrich & Naumann
(86) Internationale Anmeldenummer: PCT/DE2016/200226
(87) Internationale Veröffentlichungsnummer: WO 2017/005254

(56) Entgegenhaltungen:
- EP-A1- 1 944 569
- DE-A1- 10 217 068
- DE-T5-112009 001 652
- DE-T5-112012 002 943
- US-A- 4 802 759
- US-A1- 2004 046 966
- US-A1- 2004 150 836
- US-A1- 2005 057 810
- US-A1- 2005 237 743
- US-A1- 2008 165 341
- US-A1- 2009 103 103
- US-A1- 2010 110 528
- US-A1- 2013 016 362

## Beschreibung

Die Erfindung betrifft ein Verfahren zur Bilderfassung einer vorzugsweise strukturierten Oberfläche eines Objekts, wobei die Oberfläche durch mindestens eine Musterprojektionseinheit beleuchtet wird, wobei Bilder projizierter Muster durch mindestens eine Abbildungseinheit aufgenommen werden und wobei eine zeitliche und/oder räumliche Auswertung aufgenommener Bilder oder Bildfolgen zur Rekonstruktion der Oberfläche erfolgt.

Vorrichtungen und Verfahren der eingangs genannten Art sind aus der Praxis bekannt und existieren in unterschiedlichen Ausführungsformen.

Grundsätzlich gibt es zum einen verschiedene optische Sensoren oder Vorrichtungen zur dreidimensionalen Erfassung einer Oberflächenform. Insbesondere Sensoren mit aktiver Musterprojektion nehmen hier eine zentrale Stellung ein, da mit diesen Sensoren Höhenauflösungen im Bereich weniger Mikrometer, µm, möglich sind. Typische und erprobte Ansätze sind Streifenprojektionsverfahren - deterministische Musterfolgen -, sowie die Projektion statistischer Musterfolgen. Diese Ansätze sind unabhängig davon, ob eine linienhafte oder flächenhafte Projektion erfolgt.

Weitere Ansätze für optische 3D-Sensoren basieren auf Laufzeitverfahren, z.B. Photonenmischdetektoren (PMD-Sensoren) in TimeOfFlight-Kameras, oder statischer Musterprojektion, z.B. Light Coding Technology von der Firma PrimeSense, Projektion einer künstlichen Textur von der Firma Ensenso, welche zwar zum Teil sehr schnell 3D-Daten liefern können, jedoch in Bezug auf Auflösung und Genauigkeit gegenüber 3D-Sensoren mit aktiver Musterprojektion Nachteile haben.

Optische Sensoren nach dem Prinzip der aktiven Musterprojektion bestehen aus einer oder mehreren Musterprojektionseinheiten und einer oder mehreren Abbildungseinheiten. Die Musterprojektionseinheit wiederum setzt sich zusammen aus mindestens einer Lichtquelle, einer entsprechend angepassten Beleuchtungsoptik, einem Lichtmodulator, z.B. Display, und der Projektionsoptik.

Aktuelle Entwicklungen sind zum Beispiel ein 3D-Zeilensensor mit strukturierter Beleuchtung - Universität Magdeburg/INB; DE 10 2013 212 409 A1 - und 3D-Sensoren auf Basis zufälliger Musterprojektion mit Laser-Speckle - Uni Jena; DE 10 2012 002 161 A1.

Aus der Aufnahme der projizierten Muster wird unter Nutzung von Phasenauswerteverfahren oder zeitlichen Korrelationsverfahren die Oberflächenform berechnet.

Für das Erreichen einer hohen Messgenauigkeit und für die Eindeutigkeit der Messergebnisse sind Musterfolgen von typischerweise 4 bis 10 einzelnen Mustern für ein 3D-Bild notwendig, woraus sich relativ lange Zeiten für die Bildaufnahme ergeben. Während dieser Zeit darf bei Sensoren mit flächenhafter Projektion keine Bewegung des Sensors in Bezug zur Oberfläche stattfinden. Bei Sensoren mit linienhafter Projektion kann die Oberfläche entsprechend der Bewegung des Sensors über die Oberfläche zusammengesetzt werden.

Die Zeiten für die Bildaufnahme bei den optischen Sensoren sind zum einen abhängig von der Projektionsgeschwindigkeit und der Geschwindigkeit der Abbildungseinheiten und zum anderen von der Lichtmenge, die über die Musterprojektionseinheit auf das Messobjekt und davon wieder nutzbar in die Abbildungseinheiten gebracht werden kann. Die Empfindlichkeit der Abbildungseinheiten spielt hier ebenfalls eine signifikante Rolle.

Während bei den Abbildungseinheiten inzwischen relativ hohe Abbildungsgeschwindigkeiten realisiert werden - Zeilenkameras bis zu mehreren hundert kHz; Matrixkameras bis zu mehreren hundert Hz -, sind die typisch verwendeten Projektionseinheiten auf Geschwindigkeiten von höchstens 1900 Hz (DMD, Digital Micromirror Device) beschränkt. Für binäre Musterprojektion erreichen z.B. DMDs von Texaslnstruments zwar eine Bildwiederholfrequenz von bis zu 32 kHz binär, siehe Datenblatt TI DLP7000 - 0.7 2x LVDS Type-A DMD. Da jedoch die Projektion von z.B. sinusartigen Streifenmustern nicht-binäre Grauwerte erfordert, wird die erreichbare Bildwechselfrequenz durch die dann notwendige Pulsweitenmodulation für die Darstellung eines Bildes deutlich herabgesetzt.

Die Notwendigkeit einer hohen Beleuchtungsintensität begrenzt ebenfalls die Bildaufnahmegeschwindigkeit des optischen Sensors. LEDs können zwar prinzipiell mit hohen Taktraten geschaltet werden, die verwendeten Abbildungseinheiten sind jedoch meist zu unempfindlich, um bei den dann sehr kurzen Belichtungszeiten ausreichend Licht für die Bilderfassung zu detektieren.

Musterprojektionseinheiten mit einer laserbasierten Lichtquelle können tendenziell eine deutlich größere Lichtmenge projizieren. Vor allem bei Bildmodulatoren für die Streifenprojektion basierend auf LCD oder LCoS ist jedoch die erlaubte Lichtmenge technologisch begrenzt, da ein signifikanter Anteil der eingebrachten Energie als Verlustleistung im Element verbleibt. Dies beeinträchtigt die korrekte Funktion und kann im Extremfall zur Zerstörung führen.

Bild- bzw. Lichtmodulatoren, die aus der laserbasierten Lichtquelle stochastische Muster, z.B. in Form von objektiven Speckle, erzeugen, haben dieses Problem in dieser Form nicht. Hier haben jedoch Tests gezeigt, dass sich die prinzipbedingte gaussförmige Verteilung der Intensität über das Messfeld sowie die Häufigkeitsverteilung der Helligkeit - wenige sehr helle Spots und viele relativ dunkle Bereiche - negativ auf die Güte der Messergebnisse auswirkt und im Vergleich zur Projektion deterministischer Musterfolgen schlechtere Werte liefern. Grundsätzlich kann man mit deterministischen Musterfolgen einen gleichbleibenden Kontrast über den gesamten Messbereich erreichen. Bei statistischen Verfahren unterliegen auch der Kontrast und damit das Messergebnis einer ortsabhängigen Statistik.

Projektoren, die die notwendigen Musterfolgen durch mechanische Veränderung des Musters erzeugen, sind sehr schnell. Die Änderung der Muster erfolgt z.B. entweder durch das Rotieren einer Scheibe, auf welcher mehrere statische Muster aufgebracht sind - MiniRot-Projektor der Firma ABW - oder über einen motorisch bewegten Umlenkspiegel - Uni Jena, DE10 2011 121 696 A1. Diese Art von Projektoren sind jedoch entweder auf die vorhandenen statischen Muster beschränkt - rotierende statische Muster - oder erzeugen relativ ähnliche statistische Muster - Umlenkspiegel -, welche die Korrelation innerhalb der Bildfolgen erschweren.

Eine weitere Gruppe von Lichtmodulatoren bzw. Beleuchtungssystemen basiert auf einem LED-Array und der Erzeugung der Muster durch die Projektionsoptik, wobei die Projektionsoptik aus Linsen-Arrays besteht. Aktuelle Arbeiten dazu sind beispielsweise die LED-basierte Multiapertur-Musterprojektion vom Fraunhofer IOF Jena und eine an der Uni Magdeburg entwickelte Vorrichtung zur Generierung von Lichtmustern mit Hilfe von Zylinderlinsen, siehe DE 10 2013 002 399 A1. Diese Beleuchtungssysteme können zwar ebenfalls sehr schnell Muster projizieren, da sie nur von der möglichen Schaltfrequenz der LEDs abhängen, die projizierten Muster sind jedoch nicht oder nur in engen Grenzen veränderbar. Weiterhin lassen sich nur in einem begrenzten Tiefenschärfebereich gezielt Muster erzeugen und die Muster weisen zum Teil einen geringen Kontrast auf. US 2013/016362 A1, US 2009/103103 A1, EP 1 944 569 A1, DE 102 17 068 A1, US 4 802 759 A, US 2004/150836 A1, US 2008/165341 A1 und DE 11 2009 001652 T5 offenbaren Vorrichtungen zum optischen Ausmessen eines Objekts. US 2010/110528 A1, US 2005/237743 A1, US 2004/046966 A1, DE 11 2012 002943 T5 und US 2005/057810 A1 offenbaren Vorrichtungen unter Verwendung eines räumlichen Lichtmodulators.

Bei den bekannten Vorrichtungen und Verfahren zur Bilderfassung einer vorzugsweise strukturierten Oberfläche eines Objekts, insbesondere bei 3D-Sensoren, ist problematisch, dass es bislang noch keine entsprechende Vorrichtung und noch kein entsprechendes Verfahren gibt, wonach eine sehr schnelle Projektion von beliebigen deterministischen Musterfolgen mit analoger Grauwertdarstellung innerhalb eines Musters und einer deutlichen Veränderung der Musterinhalte von Muster zu Muster, eine Bereitstellung einer hohen Energiedichte, um sehr kurze Bildaufnahmezeiten zu realisieren, und eine homogene Helligkeitsverteilung über die gesamte Projektionsfläche ermöglicht sind.

Der vorliegenden Erfindung liegt daher die Aufgabe zugrunde, ein Verfahren zur Bilderfassung der zuvor genannten Art bereitzustellen, wonach ein Objekt sehr schnell und mit hoher Genauigkeit mit konstruktiv einfachen Mitteln insbesondere dreidimensional rekonstruiert werden kann.

Erfindungsgemäß wird die voranstehende Aufgabe durch ein Verfahren mit den Merkmalen des Anspruchs 1 gelöst. Vorteilhafte Weiterbildungen der Erfindung sind Gegenstand der abhängigen Ansprüche.

In erfindungsgemäßer Weise ist zunächst erkannt worden, dass durch eine geschickte Wahl der Ausbildung der mindestens einen Musterprojektionseinheit die voranstehende Aufgabe auf überraschend einfache Weise gelöst wird. Hierzu ist in weiter erfindungsgemäßer Weise die mindestens eine Musterprojektionseinheit derart ausgebildet, dass sie Muster unter Verwendung einer Beugung von Licht an einem optischen Gitter erzeugt. Dabei können Grauwert-Muster in hoher Geschwindigkeit erzeugt werden, woraus sich insgesamt eine sehr schnelle Rekonstruktion des Objekts mit sehr hoher Genauigkeit ergibt. In verfahrensmäßiger Hinsicht können anhand der zeitlichen und/oder räumlichen Auswertung der aufgenommenen Bilder oder Bildfolgen korrespondierende Bildpunkte über Algorithmen ermittelt werden, wobei diese ermittelten Bildpunkte gemeinsam mit einer Abbildungsfunktion eine Triangulation von Oberflächenpunkten ermöglichen.

Im Ergebnis ist mit dem erfindungsgemäßen Verfahren zur Bilderfassung einer vorzugsweise strukturierten Oberfläche eines Objekts ein Objekt sehr schnell und mit hoher Genauigkeit mit konstruktiv einfachen Mitteln insbesondere dreidimensional rekonstruierbar.

Hinsichtlich einer besonders genauen Rekonstruktion der Oberfläche kann die Rekonstruktion der Oberfläche mittels Phasenauswerteverfahren und/oder zeitlichen Korrelationsverfahren durchgeführt werden. Aus der Aufnahme der projizierten Muster kann somit bei zusätzlicher Kenntnis der Vorrichtungsanordnung die Oberflächenform durch Triangulation auf einfache Weise berechnet werden. Dabei kann es sich in weiter besonders einfacher Weise um bekannte Phasenauswerteverfahren und/oder zeitliche Korrelationsverfahren handeln.

Im Hinblick auf eine in der Praxis besonders wirksame und effektive mindestens eine Musterprojektionseinheit kann die Musterprojektionseinheit mindestens einen MEMS-Lichtmodulator aufweisen. Dieser Lichtmodulator moduliert das Licht durch Beugung an einem optischen Gitter.

Bei einer konkreten vorteilhaften Ausgestaltung kann der MEMS-Lichtmodulator elektrostatisch auf- und abbewegbare oder hin- und herbewegbare Metallstreifen und/oder Metallplatten aufweist. Diese Bewegung der Metallstreifen oder Metallplatten erfolgt, um jedes Pixel zwischen Gitterfunktion und reflektierendem Spiegel beliebig positionieren zu können.

Je nach Anwendungsfall kann eine Beugung 0. Ordnung oder 1. Ordnung im Rahmen der mindestens einen Musterprojektionseinheit genutzt werden. Dabei ist zu berücksichtigen, dass die Beugung 0. Ordnung einen recht geringen Kontrast zwischen "an" und "aus" aufweist und dass für die Nutzung der Beugung 1. Ordnung die Abbildungsoptik komplexer auszuführen ist als bei einer Anordnung mit einer Beugung 0. Ordnung.

In besonders einfacher Weise kann ein vorgebbarer analoger Grauwert durch Anlegen einer entsprechenden analogen Steuerspannung oder entsprechender analoger Steuerspannungen, vorzugsweise je Pixel, darstellbar sein. Dies kann bei einer gewählten Musterprojektionseinheit durch lediglich einen Schritt erfolgen, woraus sich Geschwindigkeitsvorteile gegenüber anderen Systemen ergeben.

In weiter vorteilhafter Weise kann die mindestens eine Musterprojektionseinheit einen auf linienhafte oder eindimensionale Projektion ausgelegten Aufbau aufweisen. Dies erlaubt bei der Anwendung beispielsweise in einem zeilenbasierten 3D-Sensor eine sehr hohe Geschwindigkeit des Betriebs im Vergleich mit anderen Typen von Projektionseinheiten. Dabei kann ein Displayelement nur eine Zeile aufweisen. Zur Erfassung von flächenhaften Gebilden wird dann die fortlaufende Erfassung einer Zeile in Kombination mit einer definierten Relativbewegung zwischen Messobjekt und Sensor verwendet

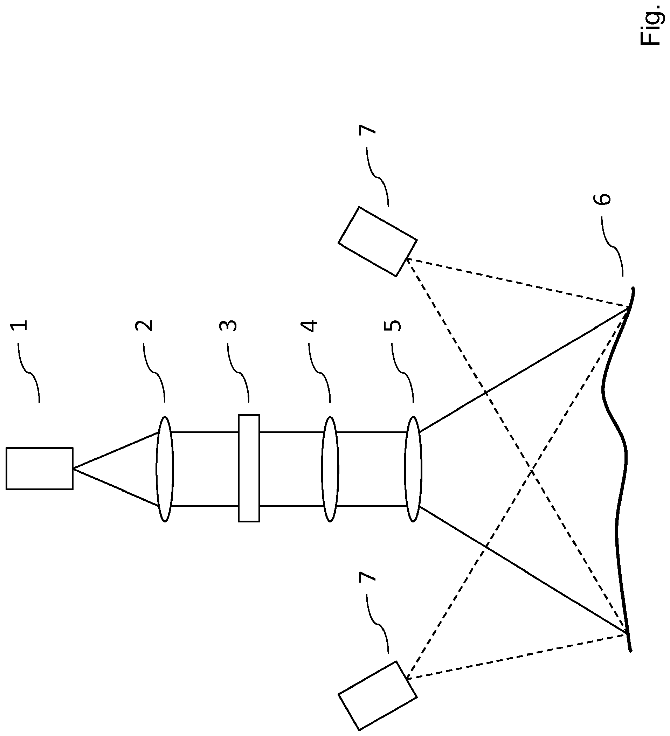

Auf der Basis einer nicht erfindungsgemäßen Vorrichtung können unterschiedliche Anordnungen von 3D-Sensoren aufgebaut werden. Dabei kann ein 3D-Zeilensensor oder ein 3D-Matrixsensor gebildet werden. Andererseits ist auch eine Anwendung einer nicht erfindungsgemäßen Vorrichtung in der Deflektometrie von großem Vorteil, wobei hier verfahrensbedingt keine Projektionsoptik für die Abbildung auf das zu messende Objekt genutzt wird, sondern beispielsweise eine Mattscheibe oder ähnliches erforderlich ist, auf welche die Musterprojektionseinheit die Muster projizieren kann.

Bei einer konkreten Ausgestaltung einer nicht erfindungsgemäßen Vorrichtung kann die mindestens eine Musterprojektionseinheit eine monochromatische Lichtquelle, eine Weißlichtquelle oder eine polychromatische Lichtquelle aufweisen. Bei der Auswahl der Lichtquelle ist auf den jeweiligen Anwendungsfall abzustellen. In weiter vorteilhafter Weise kann die mindestens eine Musterprojektionseinheit eine Optik zur Aufweitung des erzeugten Lichts auf eine Höhe und Breite eines Projektionsdisplays aufweisen. Eine durch die Aufweitung entstehende Inhomogenität der Beleuchtung kann durch eine entsprechende pixelweise Kalibrierung des Projektionsdisplays korrigiert werden.

Die vorliegende Erfindung bietet eine Kombination von mindestens einer Musterprojektionseinheit und mindestens einer Abbildungseinheit, mit der das Objekt sehr schnell und ohne Einbußen bei der Genauigkeit der 3D-Rekonstruktion im Vergleich zu bereits bekannten Vorrichtungen dreidimensional vermessen werden kann.

Mit einer nicht erfindungsgemäßen Vorrichtung und dem erfindungsgemäßen Verfahren sind eine sehr schnelle Projektion von beliebigen deterministischen Musterfolgen mit analoger Grauwertdarstellung innerhalb eines Musters und einer deutlichen Veränderung der Musterinhalte von Muster zu Muster, eine Bereitstellung einer hohen Energiedichte, um sehr kurze Bildaufnahmezeiten zu realisieren, und eine homogene Helligkeitsverteilung über die gesamte Projektionsfläche ermöglicht.

Gemäß einem bevorzugten Ausführungsbeispiel ist ein Verfahren zur Bilderfassung einer vorzugsweise strukturierten Oberfläche eines Objekts bereitgestellt, unter Verwendung mindestens einer Abbildungseinheit zur Aufnahme der Oberfläche, wobei die Oberfläche durch mindestens eine Musterprojektionseinheit strukturiert beleuchtet wird und wobei eine zeitliche und/oder räumliche Auswertung aufgenommener Bildfolgen zur Rekonstruktion der Oberfläche erfolgt und wobei anhand einer zeitlichen und/oder räumlichen Auswertung der einzelnen Bilder über Algorithmen korrespondierende Bildpunkte ermittelt werden, die gemeinsam mit der Abbildungsfunktion eine Triangulation von Oberflächenpunkten ermöglichen.

Eine Abbildungsfunktion stellt mathematisch eine Zuordnung von 3D-Weltkoordinaten zum Koordinatensystem eines Kamerabildes oder des Bildes einer Abbildungseinheit dar. So kann für jede 3D-Koordinate bzw. jeden Raumpunkt berechnet werden, an welcher Stelle sich dieser Punkt im Kamerabild oder Bild einer Abbildungseinheit befindet. Diese Zuordnung wird insbesondere durch die geometrischen Abmessungen eines Kamerasensors - Größe und Anzahl der Pixel - sowie die Kennwerte des zu einer Kamera gehörenden Objektivs - Brennweite, Verzeichnung - bestimmt.

Bei einer weiter vorteilhaften Ausgestaltung erzeugt die mindestens eine Musterprojektionseinheit die Muster unter Verwendung der Beugung des Lichts an einem optischen Gitter.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt die einzige
Fig. in einer schematischen Darstellung ein Ausführungsbeispiel einer nicht erfindungsgemäßen Vorrichtung zur Bilderfassung einer vorzugsweise strukturierten Oberfläche eines Objekts.

Gemäß einem Ausführungsbeispiel der vorliegenden Erfindung erfolgt eine 3D-Messung von Objekten, wobei das Ausführungsbeispiel eine Kombination einer oder mehrerer Abbildungs- und Musterprojektionseinheiten aufweist, wobei die Musterprojektionseinheit oder Musterprojektionseinheiten MEMS-Lichtmodulatoren aufweisen, welche das Licht durch Beugung an einem optischen Gitter modulieren, z.B. GLV - Grated Light Valve und PLV - Planar Light Valve der Fa. Silicon Light Machine, CA; WO 1996041217 A1, WO 2005059596 A2. Hierbei werden Metallstreifen bzw. Metallplatten elektrostatisch auf- und abbewegt, um jedes Pixel zwischen Gitterfunktion und reflektierendem Spiegel beliebig positionieren zu können. Genutzt wird entweder die Beugung 0. Ordnung oder die Beugung 1. Ordnung, wobei diese einen recht geringen Kontrast zwischen An/Aus aufweist und für die Nutzung der Beugung 1. Ordnung die Abbildungsoptik komplexer wird.

Mit einer solchen Projektionseinheit kann ein bestimmtes analoges Grauwert-Muster in einem Schritt durch Anlegen einer entsprechenden analogen Steuerspannung dargestellt werden, was einen wesentlichen Geschwindigkeitsvorteil gegenüber DMDs, LCDs oder LCoS darstellt, welche analoge Grauwert-Muster nur mit Hilfe zeitlicher Integration aufeinander folgender pulsweitenmodulierter Binär-Muster darstellen können. Weiterhin ist eine solche Projektionseinheit im Unterschied zu DMDs, LCDs oder LCoS nativ auch eindimensional, d. h. auf linienhafte oder eindimensionale Projektion ausgelegt, was für die Anwendung in einem zeilenbasierten 3D-Sensor ebenfalls eine deutlich höhere Geschwindigkeit gegenüber denkbaren Lösungen mit den anderen genannten Technologien erlaubt. Die oben beschriebene Projektionseinheit ist also die Grundlage für eine deutlich schnellere Musterprojektion und Bildaufnahme, als es mit DMDs, LCDs oder LCoS aktuell möglich ist.

Die oben beschriebenen Projektionseinheiten sind bisher eindimensional verfügbar - zweidimensionale Prototypen sind in Entwicklung - und wurden bisher ausschließlich im digitalen Offsetdruck, in der EUV-Lithografie und für die digitale Kinoprojektion konkret genutzt. Darüber hinaus werden solche Projektionseinheiten zwar als allgemein anwendbar für Verfahren der Umfelderkennung - DE10 2007 040 176 A1 - und Positionsverfolgung - US 20070268398 - beschrieben, stellen jedoch für diese Verfahren nur eine mögliche von mehreren gleichwertigen Varianten dar, wohingegen hier diese Art der Projektion essentiell für die Lösung der gestellten Aufgabe ist.

Die Nutzung als Projektionseinheit für beliebige deterministische analoge Grauwert-Muster mit einer sehr hohen Energiedichte in Kombination mit einer oder mehreren schnellen und hochauflösenden Abbildungseinheiten in einem Sensor für die 3D-Messtechnik auf Basis von Musterfolgen und zeitlichen oder örtlichen Korrelationsverfahren ist neu.

Optische Sensoren nach dem Prinzip der aktiven Musterprojektion bestehen aus einer oder mehreren Musterprojektionseinheiten und einer oder mehreren Abbildungseinheiten. Die Musterprojektionseinheit wiederum setzt sich üblicherweise zusammen aus mindestens einer Lichtquelle, einer entsprechend angepassten Beleuchtungsoptik, einem Lichtmodulator, z.B. Display, und der Projektionsoptik.

Aus der Aufnahme der projizierten Muster durch die Abbildungseinheit(en) wird unter Nutzung von Phasenauswerteverfahren oder zeitlichen Korrelationsverfahren und dem Wissen über die Sensoranordnung die Oberflächenform durch Triangulation berechnet.

Im Gegensatz zu den bisher bekannten Vorrichtungen wird als Musterprojektionseinheit ein MEMS-Lichtmodulator wie oben beschrieben genutzt, welcher das Licht durch Beugung an einem optischen Gitter moduliert.

Grundsätzlich sind mit diesen Projektionseinheiten verschiedenste Anordnungen von 3D-Sensoren vorteilhaft:
3D-Zeilensensoren mit nur einer Projektionseinheit und nur einer Kamera bis zu zwei oder mehreren Projektionseinheiten koplanar und mit einer oder mehreren Kameras koplanar angeordnet, um z.B. höhere laterale Auflösungen oder größere Messfelder zu erreichen, sind möglich, vgl. auch WO 2014000738 A2.
3D-Matrixsensoren können direkt mit einer oder mehreren zweidimensionalen Projektionseinheiten und einer oder mehreren Matrixkameras aufgebaut werden. Weiterhin könnte auch die Abbildung der eindimensionalen Projektionseinheit mit Hilfe spezieller Linsen, z.B. Powell Linse, Stablinse, o.ä., auf eine Fläche aufgeweitet werden.

Ebenfalls denkbar ist die Anwendung einer solchen Projektionseinheit in der Deflektometrie, wobei hier verfahrensbedingt keine Projektionsoptik für die Abbildung auf das Messobjekt genutzt wird, sondern z.B. eine Mattscheibe o.ä. notwendig ist, auf welche die Projektionseinheit die Muster projizieren kann.

Die einzige Fig. zeigt ein Ausführungsbeispiel in Form eines 3D-Zeilensensors mit einer Musterprojektionseinheit und zwei Kameras als Abbildungseinheiten.

Aus einer Laserlichtquelle 1 wird mit Hilfe entsprechender Linsen 2 eine Laserlinie mit der Breite und der Höhe des aktiven Bereiches des Projektionsdisplays 3 erzeugt und damit die Projektionseinheit beleuchtet. Die Projektionseinheit moduliert diese Laserlinie pixelweise, siehe oben. Über eine Fourieroptik 4 wird die gewünschte Beugungsordnung gefiltert und über die Projektionsoptik 5 wird die modulierte Laserlinie auf das Objekt 6 projiziert.

Mit zwei zueinander synchronisierten und kalibrierten Kameras 7 als Abbildungseinheiten wird eine bestimmte Anzahl von Bildern von den auf das Objekt projizierten Mustern aufgenommen.

Die Sequenz aus den Bildpaaren wird zur dreidimensionalen Rekonstruktion der Oberfläche des Objektes genutzt. Für die Berechnung der Oberflächenform können z.B. bei der Nutzung von Graycode- und/oder Sinusmustern die bekannten Algorithmen zur 3D-Rekonstruktion - Phasenkorrelation, Zeitkorrelation - genutzt werden. Weiterhin können auch Musterfolgen mit einer optimierten Statistik berechnet und für die Messung verwendet werden, beispielsweise Sinus-, Dreiecks- oder andere periodische Muster mit zeilenweise variierenden Phasen und/oder Periodenlängen. Beispielsweise können Folgen von Sinusmustern mit unterschiedlicher Phasenlage und unterschiedlicher Frequenz verwendet werden.

Für die Musterprojektion kann sowohl eine monochromatische Lichtquelle in einem spektralen Bereich von UV bis NIR, z.B. Laser beim GLV-Display, als auch weisses bzw. polychromatisches Licht - bei PLV-Display - verwendet werden. Die üblicherweise punktförmige Lichtquelle wird durch eine geeignete Optik idealerweise auf die Höhe und Breite des Projektionsdisplays aufgeweitet. Die durch die Aufweitung entstehende Inhomogenität der Beleuchtung kann durch eine entsprechende pixelweise Kalibrierung des Projektionsdisplays korrigiert werden.

Durch die Nutzung einer monochromatischen Lichtquelle besteht die Möglichkeit, störende Fremdlichteinflüsse mit Hilfe entsprechender Farbfilter vor den Abbildungseinheiten zu unterdrücken. Um bei Nutzung einer monochromatischen Lichtquelle subjektive Speckle zu vermeiden, können verschiedene Verfahren eingesetzt werden, beispielsweise eine Wellenlängenmodulation des Lasers (Chirp), Verwendung breitbandiger Laser, Erzeugung und Mischung einer 2. Polarisierungsrichtung und eine Abbildung über einen Diffusor.

Hinsichtlich weiterer vorteilhafter Ausgestaltungen einer nicht erfindungsgemäßen Vorrichtung und des erfindungsgemäßen Verfahrens wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebenen Ausführungsbeispiel der erfindungsgemäßen Lehre lediglich zur Erörterung der beanspruchten Lehre dient, diese jedoch nicht auf das Ausführungsbeispiel einschränkt.

### Bezugszeichenliste

- 1: Lichtquelle
- 2: Linse
- 3: Projektionsdisplay
- 4: Fourieroptik
- 5: Projektionsoptik
- 6: Objekt
- 7: Kamera, Abbildungseinheit

## Patentansprüche

1. Verfahren zur Bilderfassung einer vorzugsweise strukturierten Oberfläche eines Objekts (6), wobei die Oberfläche durch mindestens eine Musterprojektionseinheit beleuchtet wird, wobei Bilder projizierter Muster durch mindestens eine Abbildungseinheit (7) aufgenommen werden und wobei eine zeitliche und/oder räumliche Auswertung aufgenommener Bilder oder Bildfolgen zur Rekonstruktion der Oberfläche erfolgt,
**dadurch gekennzeichnet, dass** mit der Musterprojektionseinheit ein vorgebbarer analoger Grauwert durch Anlegen einer entsprechenden analogen Steuerspannung oder entsprechender analoger Steuerspannungen, vorzugsweise je Pixel, dargestellt wird und
dass anhand der zeitlichen und/oder räumlichen Auswertung der aufgenommenen Bilder oder Bildfolgen über Algorithmen korrespondierende Bildpunkte ermittelt werden, die gemeinsam mit einer Abbildungsfunktion eine Triangulation von Oberflächenpunkten ermöglichen.

2. Verfahren nach Anspruch 1, **dadurch gekennzeichnet, dass** die Rekonstruktion der Oberfläche mittels Phasenauswerteverfahren und/oder zeitlichen Korrelationsverfahren durchgeführt wird.

3. Verfahren nach Anspruch 1 oder 2, **dadurch gekennzeichnet, dass** als die mindestens eine Musterprojektionseinheit eine Musterprojektionseinheit mit mindestens einem MEMS-Lichtmodulator, Micro-Electromechanical System, verwendet wird.

4. Verfahren nach Anspruch 3, **dadurch gekennzeichnet, dass** als MEMS-Lichtmodulator ein MEMS-Lichtmodulator mit elektrostatisch auf- und abbewegbaren oder hin- und herbewegbaren Metallstreifen und/oder Metallplatten verwendet wird.

5. Verfahren nach einem der Ansprüche 1 bis 4, **dadurch gekennzeichnet, dass** eine Beugung 0. Ordnung oder 1. Ordnung genutzt wird.

6. Verfahren nach einem der Ansprüche 1 bis 5, **dadurch gekennzeichnet, dass** als die mindestens eine Musterprojektionseinheit eine Musterprojektionseinheit mit einem auf linienhafte oder eindimensionale Projektion ausgelegten Aufbau verwendet wird.

7. Verfahren nach einem der Ansprüche 1 bis 6, **dadurch gekennzeichnet, dass** das Verfahren als 3D-Zeilensensor- oder 3D-Matrixsensor-Verfahren durchgeführt oder in der Deflektometrie angewendet wird.

8. Verfahren nach einem der Ansprüche 1 bis 7, **dadurch gekennzeichnet, dass** als die mindestens eine Musterprojektionseinheit eine Musterprojektionseinheit mit einer monochromatischen Lichtquelle (1), einer Weißlichtquelle oder einer polychromatischen Lichtquelle verwendet wird, wobei vorzugsweise als die mindestens eine Musterprojektionseinheit eine Musterprojektionseinheit mit einer Optik zur Aufweitung des erzeugten Lichts auf eine Höhe und Breite eines Projektionsdisplays (3) verwendet wird.

9. Verfahren nach einem der Ansprüche 1 bis 8, **dadurch gekennzeichnet, dass** die Muster mittels der Musterprojektionseinheit unter Verwendung einer Beugung von Licht an einem optischen Gitter erzeugt werden.

## Claims

1. Method for image acquisition of a preferably structured surface of an object (6), wherein the surface is illuminated by means of at least one pattern projection unit, wherein images of projected patterns are recorded by means of at least one imaging unit (7), and wherein a temporal and/or spatial evaluation of recorded images or image sequences is carried out in order to reconstruct the surface,
**characterised in that** with the pattern projection unit a predeterminable analogue grey value is depicted by applying a corresponding analogue control voltage or corresponding analogue control voltages, preferably per pixel, and **in that**, with reference to the temporal and/or spatial evaluation of the recorded images or image sequences, there are established by means of algorithms corresponding image points, which, together with an imaging function, enable a triangulation of surface points.

2. Method according to claim 1, **characterised in that** the reconstruction of the surface is carried out by means of phase evaluation methods and/or temporal correlation methods.

3. Method according to claim 1 or claim 2, **characterised in that** a pattern projection unit having at least one MEMS light modulator, Micro-Electromechanical System, is used as the at least one pattern projection unit.

4. Method according to claim 3, **characterised in that** a MEMS light modulator with metal strips and/or metal plates which can be moved up and down or back and forth in an electrostatic manner is used as a MEMS light modulator.

5. Method according to any one of claims 1 to 4, **characterised in that** a diffraction of the zero order of magnitude or of the 1st order of magnitude is used.

6. Method according to any one of claims 1 to 5, **characterised in that** a pattern projection unit having a structure which is configured for linear or one-dimensional projection is used as the at least one pattern projection unit.

7. Method according to any one of claims 1 to 6, **characterised in that** the method is carried out as a 3D line sensor or 3D matrix sensor method or is used in deflectometry.

8. Method according to any one of claims 1 to 7, **characterised in that** a pattern projection unit having a monochromatic light source (1), a white light source or a polychromatic light source is used as the at least one pattern projection unit, wherein preferably as the at least one pattern projection unit a pattern projection unit with an optical unit for expanding the light produced to a height and width of a projection display (3) is used.

9. Method according to any one of claims 1 to 8, **characterised in that** the patterns are produced by means of the pattern projection unit using a diffraction of light in an optical grid.

## Revendications

1. Procédé d'acquisition d'images d'une surface, de préférence structurée, d'un objet (6), la surface étant éclairée par au moins une unité de projection de motifs, des images des motifs projetés étant capturées par au moins une unité de représentation (7) et une analyse temporelle et/ou spatiale des images ou séquences d'images capturées étant effectuée pour la reconstruction de la surface,
**caractérisé en ce que**, avec l'unité de projection de motifs, un niveau de gris analogique prédéterminé est représentée par l'application d'une tension de commande analogique correspondante ou de tensions de commande analogiques correspondantes, de préférence pour chaque pixel et **en ce que**, à l'aide des images ou séquences d'images capturées, des points d'images correspondants sont déterminés par l'intermédiaire d'algorithmes, qui permettent, conjointement avec une fonction de représentation, une triangulation de points de la surface.

2. Procédé selon la revendication 1, **caractérisé en ce que** la reconstruction de la surface est effectuée au moyen de procédés d'analyse de phase et/ou de procédés de corrélation temporels.

3. Procédé selon la revendication 1 ou 2, **caractérisé en ce que**, en tant que l'au moins une unité de projection de motifs, on utilise une unité de projection de motifs avec au moins un modulateur de lumière MEMS (Micro-Electromechanical System).

4. Procédé selon la revendication 3, **caractérisé en ce que**, en tant que modulateur de lumière MEMS, on utilise un modulateur de lumière MEMS avec des bandes métalliques et/ou des plaques métalliques pouvant être déplacées de manière électrostatique vers le haut ou vers le bas ou avec un mouvement de va-et-vient.

5. Procédé selon l'une des revendications 1 à 4, **caractérisé en ce qu'**une diffraction d'ordre 0 ou d'ordre 1 est utilisée.

6. Procédé selon l'une des revendications 1 à 5, **caractérisé en ce que**, en tant que l'au moins une unité de projection de motifs, on utilise une unité de projection de motifs avec une structure conçue pour une projection linéaire ou monodimensionnelle.

7. Procédé selon l'une des revendications 1 à 6, **caractérisé en ce que** le procédé est exécuté en tant que procédé à capteurs linéaires 3D ou à capteurs matriciels 3D ou en déflectométrie.

8. Procédé selon l'une des revendications 1 à 7, **caractérisé en ce que**, en tant que l'au moins une unité de projection de motifs, on utilise une unité de projection de motifs avec une source de lumière monochromatique (1), une source de lumière blanche ou une source de lumière polychromatique, moyennant quoi, de préférence, en tant que l'au moins une unité de projection de motifs, on utilise une unité de projection de motifs avec une optique pour l'élargissement de la lumière produite à une hauteur et une largeur d'un écran de projection (3).

9. Procédé selon l'une des revendications 1 à 8, **caractérisé en ce que** les motifs sont générés au moyen de l'unité de projection de motifs à l'aide d'une diffraction de la lumière au niveau d'une grille optique.
